# EUROPÄISCHE PATENTSCHRIFT

(11) **EP 1 451 129 B1**
(45) Veröffentlichungstag und Bekanntmachung des Hinweises auf die Patenterteilung: **13.07.2005**
(21) Anmeldenummer: 02787406.4
(22) Anmeldetag: 27.11.2002
(51) Int. Cl.: C05G 3/00, C05G 5/00

(54) **BESCHICHTETE KÖRNIGE STOFFE**
COATED GRANULAR SUBSTANCES
SUBSTANCES GRANULEUSES ENROBEES

(30) Priorität: 29.11.2001 DE 10158693
(43) Veröffentlichungstag der Anmeldung: 01.09.2004
(73) Patentinhaber: Ashland Südchemie-Kernfest Gmbh, 40721 Hilden (DE)
(72) Erfinder: WINTER, Reinhard, 42489 Wülfrath (DE); PRIEBE, Christian, 42489 Wülfrath (DE); KUHLMANN, Peter, 42489 Wülfrath (DE)
(74) Vertreter: VOSSIUS & PARTNER
(86) Internationale Anmeldenummer: PCT/DE2002/004352
(87) Internationale Veröffentlichungsnummer: WO 2003/048075

(56) Entgegenhaltungen:
- EP-A- 0 230 601
- EP-A- 0 974 568
- US-A- 6 045 810
- US-B1- 6 358 295

## Beschreibung

Die Erfindung betrifft einen beschichteten körnigen Stoff, wobei die Beschichtung ein Harz ist, umfassend das Reaktionsprodukt von mindestens einer Verbindung ausgewählt aus Cardol, Cardanol oder von Derivaten oder Oligomeren dieser Verbindungen mit einer Isocyanatkomponente, und ein Verfahren zu seiner Herstellung. Cardol oder Cardanol und deren Derivate können aus dem nachwachsenden Rohstoff Cashewnußöl gewonnen werden.

Es ist bekannt, körnige Stoffe zur Herabsetzung der Auflösungsgeschwindigkeit und damit zur Verlängerung der Wirkungsdauer mit einer zwar wasserdurchlässigen, jedoch wasserunlöslichen Beschichtung zu versehen. Besondere Bedeutung hat diese Technik auf dem Gebiet der Düngemittel erlangt.

DE-A-1 242 573 beschreibt ein Verfahren zum Einkapseln von Granulaten durch Besprühen mit einem flüssigen Überzugsmittel. Als Überzugsmittel wird ein Copolymerisat aus Dicyclopentadien mit trocknenden oder halbtrocknenden Ölen vorgeschlagen. Die Durchführung dieses Verfahrens erfordert jedoch die Verdünnung des Überzugsmittels mit einem flüchtigen Lösungsmittel auf eine frei fließende Konsistenz, um ein Aufsprühen auf das Granulat zu ermöglichen. Das zugesetzte Lösungsmittel muß während des Verfahrens bei hohen Temperaturen entfernt werden. Dadurch werden brennbare und unter Umständen gesundheitsschädliche Dämpfe freigesetzt. Außerdem wird durch die Trocknung die erforderliche Zeit für einen Beschichtungsvorgang ungünstig in die Länge gezogen. Insgesamt ist ein sehr hoher Energieaufwand sowohl zum Aufheizen, aber auch zum Kühlen erforderlich. Durch die frei werdenden Dämpfe ist außerdem eine aufwendige Abluftreinigung erforderlich.

WO 96/41779 betrifft umhüllte Düngemittelgranulate, die mit einem Carboxylgruppentragenden Ethylencopolymerisat, bei dem die Carboxylgruppen auch in Form ihrer Alkali-, Erdalkali-, oder Ammoniumsalze vorliegen können, umhüllt sind, wobei das Carboxylgruppen-tragende Ethylencopolymerisat aus a) 75 bis 90 Gew.-% Ethylen und b) 10 bis 25 Gew.-% einer α-olefinisch ungesättigten C₃-C₈-Alkylcarbonsäure aufgebaut ist und wobei solche umhüllten Düngemittelgranulate, die einen Pflanzenschutzwirkstoff enthalten, ausgenommen sind. Die Copolymerisate werden in Form einer wäßrigen Lösung oder wäßrigen Dispersion auf das Düngemittelgranulat aufgebracht. Dadurch kann zwar einerseits auf die Verwendung von gesundheitlich bedenklichen organischen Lösemitteln verzichtet werden. Ein Nachteil dieses Verfahrens ist jedoch, daß bei der Aufbringung der wäßrigen Lösung oder Dispersion des Umhüllungsmaterials das wasserlösliche Düngemittelgranulat angelöst werden kann. Dadurch kann während des Verfahrens pro Zeiteinheit nur eine begrenzte Menge des Umhüllungsmaterials zugesetzt werden. Zugleich muß dafür Sorge getragen werden, daß das Wasser rasch verdunsten kann, um ein Auflösen des Granulates zu verhindern. Deshalb ist auch bei diesem Verfahren ein hoher Energieaufwand und eine technisch aufwendige Verfahrensführung erforderlich, um das zugesetzte Wasser möglichst rasch zu entfemen.

Die Beschichtung von wasserlöslichen Granulaten mit Kunstharzen auf Basis einer Polyolkomponente und Isocyanat ist bereits in EP-A 0 230 601 beschrieben. Dazu wird eine Beschichtungsmasse verwendet, die aus einer Isocyanatkomponente und einer Polyolkomponente, bestehend aus einem Kondensationsprodukt aus Phenolen und Aldehyden, einem hydroxylgruppenhaltigen Weichmacher und ggf. aus einem hydroxylgruppenhaltigen Verdünnungsmittel besteht. Diese Mischung kann ohne Wärmezufuhr bei Raumtemperatur mit einem Amin als Katalysator ausgehärtet werden.

Dieses Verfahren zeichnet sich durch hohe Effizienz aus, insbesondere deshalb, da es ohne zusätzliche Wärmezufuhr und ohne aufwendige Lösemittelentsorgung ausgeführt werden kann.

Dennoch besteht der Wunsch, die Verarbeitungseigenschaften, wie z.B. die Klebneigung, des Harzes zu verbessern, um körnige Stoffe gezielt und sparsam mit dem Substrat beschichten zu können. Sofern es sich bei dem beschichteten Stoff um ein Düngemittel handelt, sollte es möglich sein, den Anteil an Beschichtungsmaterial möglichst gering zu halten, um der Pflanze - gemessen an der Verwendung einer bestimmten Menge eines beschichteten Düngergranulats - mehr Nährstoff zur Verfügung stellen zu können. Ferner ist es wünschenswert, daß das beschichtete Düngemittel genau so gestaltet werden kann, daß je nach Typus der zu düngenden Pflanze ein exaktes und reproduzierbares Abgabeverhalten eingestellt werden kann. Weiterhin kann es als ein Vorteil betrachtet werden, wenn das Beschichtungsmaterial auf einem nachwachsenden Rohstoff basieren kann.

Überraschenderweise lassen sich alle wünschenswerten Vorteile dadurch erreichen, daß der körnige Stoff mit einem Harz beschichtet wird, welches ein Reaktionsprodukt von mindestens einer Verbindung ausgewählt aus Cardol oder Cardnol, deren Derivaten oder deren Oligomere (=Polyolkomponente) mit einer Isocyanatkomponente umfaßt. Erfindungsgemäß kann das Harz in sehr dünnen Schichten und kontrolliert auf den zu beschichtenden körnigen Stoff aufgetragen werden, was insbesondere im Bereich der Düngemittel die gewünschten Vorteile bewirkt. Cardol und Cardanol können aus dem nachwachsenden Rohstoff Cashewnußöl gewonnen werden.

Die aufgetragene Beschichtung beträgt 3 bis 15, bevorzugt 8 bis 12 Gew.-%, bezogen auf die Menge an körnigem Stoff. Die Komgröße des zu beschichtenden körnigen Stoffes beträgt 1 bis 10 mm, vorzugsweise 2 bis 7 mm und ganz bevorzugt 3 bis 5 mm. Der zu beschichtende körnige Stoff kann wasserlöslich sein.

Erfindungsgemäß findet man zum Beispiel bei der Beschichtung von Düngemitteln erheblich verbesserte Abgaberaten verglichen mit unbeschichteten oder gemäß des Standes der Technik beschichteten Materialien.

Die Erfindung stellt demnach einen mit diesem Harz beschichteten Stoff, ein Verfahren zur Herstellung des beschichteten Stoffes und die Verwendung des Harzes zur Beschichtung körniger Stoffe, wie in den Patentansprüchen definiert, bereit.

Cashewnußöl wird aus dem Samen des Cashew-Baumes gewonnen und besteht zu ca. 90% aus Anacardsäure und ca. 10 % aus Cardol. Durch Hitzebehandlung in saurer Umgebung entsteht durch Decarboxylierung Cardanol, ein substituiertes Phenol, sowie Cardol. Cardol und Cardanol können als reine Substanzen durch Destillation gewonnen werden. Dabei entstehen auch Oligomere dieser Verbindungen, die in dem Destillationssumpf verbleiben und mit üblichen, dem Fachmann bekannten Maßnahmen gewonnen werden können.

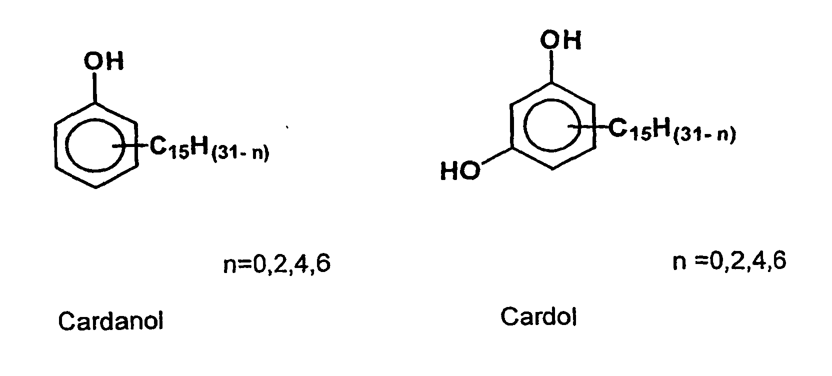

Erfindungsgemäß eignen sich als Ausgangsprodukte zur Reaktion mit der Isocyanatkomponente z.B. aus Cashewnußöl gewonnenes Cardol und Cardanol oder Gemische daraus sowie deren Oligomere aus dem Destillationssumpf, welche als technische Produkte zur Verfügung stehen. Ferner können auch Derivate von Cardol und/oder Cardanol als Ausgangssubstanzen eingesetzt werden. Hier seien beispielhaft durch Maleinieren, Epoxidieren oder Hydrieren der in den Seitenketten vorhandenen Doppelbindungen erhaltene Reaktionsprodukte genannt. Diese können wahlweise weiter mit Wasser oder einem Alkohol umgesetzt werden, wobei in den Seitenketten Diole oder α-Hydroxyether entstehen. Weitere geeignete Derivate von Cardol und/oder Cardanol können auch durch Umsetzen dieser Verbindungen oder der durch Maleinieren, Epoxidieren oder Hydrieren erhaltenen Verbindungen mit einem Aldehyd erhalten werden.

Diese substituierten Phenole und Resorcine lassen sich nach bekannten Verfahren, wie z.B. durch Umsetzung mit Formaldehyd oder Säure, insbesondere Glyoxylsäure, oligomerisieren. Sowohl die Monomeren als auch die Oligomeren eignen sich aufgrund ihrer Hydroxylfunktionalität gut zur Umsetzung mit Isocyanaten und können z.B. Kondensationsprodukte aus Phenol und Formaldehyd in einigen Anwendungen teilweise oder ganz ersetzen.

Die erfindungsgemäße Polyolkomponente umfaßt mindestens eine Verbindung ausgewählt aus Cardol, Cardanol oder deren Derivaten oder Oligomeren oder Mischungen daraus zu einem Anteil von 5 bis 100 Gew.%, vorzugsweise 7 bis 70 Gew.%. Neben der Verbindung ausgewählt aus Cardol, Cardanol oder deren Derivaten oder Oligomeren kann die erfindungsgemäße Polyolkomponente einen oder mehrere hydroxylgruppenhaltige Weichmacher, und/oder ein Kondensationsprodukt aus einem Phenol und Formaldehyd und/oder ein oder mehrere hydroxylgruppenhaltige Verdünnungsmittel enthalten.

Als hydroxylgruppenhaltige Weichmacher eignen sich die in der Polyurethanchemie zu diesem Zweck üblicherweise eingesetzten Stoffe, wie z.B. langkettige aliphatische Alkohole und deren Derivate, wie hydroxyfunktionelle Polyether und Polyester, insbesondere Rizinusöl bzw. dessen Derivate. Mit diesen funktionellen Weichmachem lassen sich hervorragend elastische Überzüge mit den gewünschten "Slow Release" Eigenschaften erhalten, ohne daß diese Weichmacher aus der Hülle migrieren können und dadurch eine nachträgliche Versprödung hervorrufen.

Je nach den gewünschten Eigenschaften kann die erfindungsgemäße Polyolkomponente optional Kondensationsprodukte aus Phenolen und Aldehyden, wie Novolake oder sogenannte Benzyletherharze der allgemeinen Formel 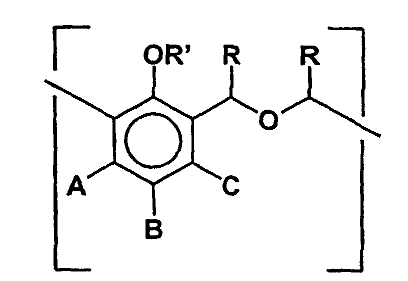 umfassen.

A, B, C können gleich oder verschieden sein und jeweils ein Wasserstoff- oder Halogenatom, einen C₁ - C ₁₀ Kohlenwasserstoffrest, vorzugsweise eine Methyl-, Butyl-, Octyl- oder Nonyl-, ganz bevorzugt eine Methyl-Gruppe, eine Methylol-Gruppe, oder einen Isopropylidenphenol- oder Methylenphenolrest bedeuten. Falls A, B oder C eine Hydroxyfunktionalität aufweist, kann diese mit einem C₁-C₁₀-Kohlenwasserstoffrest verethert sein.

R kann ein Wasserstoffatom, aber auch ein C₁-C₈ Kohlenwasserstoffrest sein, bevorzugt ist R ein Wasserstoffatom. R' kann ein Wasserstoffatom oder ein C₁-C₁₀-Kohlenwasserstoffrest, vorzugsweise eine Methyl-, Ethyl- oder Butyl-Gruppe sein.

Wie erwähnt kann die erfindungsgemäße Polyolkomponente neben mindestens einer Verbindung ausgewählt aus Cardol, Cardanol oder deren Derivaten oder Oligomeren auch ein Kondensationsprodukt aus einem Phenol und einem Aldehyd umfassen. Umgekehrt kann die erfindungsgemäße Polyolkomponente auch dadurch bereitgestellt werden, daß mindestens eine Verbindung ausgewählt aus Cardol, Cardanol oder deren Derivaten oder Oligomeren in vorstehend beschriebene Kondensationsprodukte in einer Menge von 5 bis 95% einkondensiert wird. Auch können beide erfindungsgemäß hergestellten Polyolkomponenten kombiniert eingesetzt werden.

Zur Einstellung der Viskosität und Modifizierung der Beschichtungsmasse können wahlweise die in der Polyurethanchemie üblichen Verdünnungsmittel eingesetzt werden. Diese können hydroxyfunktionell sein oder nicht. Beispielhaft hierfür sei Glyzerin, Ethylenglycol, Diethylenglycol, Butandiol, Diacetonalkohol, und Butanol genannt.

Zur Verhinderung unerwünschter Blasenbildung aus der Nebenreaktion der Isocyanate mit Wasserspuren können der erfindungsgemäßen Polyolkomponente optional weitere übliche Zusatzmittel, wie Trocknungsmittel (beispielsweise Zeolithe oder orhto-Ameisensäureester) oder andere Molekularsiebe, zugesetzt werden. Benetzungshilfsmittel, Verlaufshilfsmittel (zum Beispiel auf Silikon basierende Additive, wie Polysiloxane) können gegebenenfalls auch zugesetzt werden.

Als Isocyanatkomponente für die Herstellung der erfindungsgemäßen Polyurethanbeschichtung, die auf körnige Stoffe aufgebracht wird, können aliphatische, aromatische und heterocyclische Isocyanate mit mindestens 2 Isocyanatgruppen in einem Molekül oder deren Oligomere oder deren Polymere verwendet werden.

Beispiele dafür sind:
Toluol-2,4-diisocyanat; Toluol-2,6-diisocyanat; 3-Phenyl-2-ethylendiisocyanat; 1,5-Naphthalindiisocyanat; Cumol-2,4-diisocyanat; 4-Methoxy-1,3-diphenyldiisocyanat; 4-Chlor-1,3-phenyldiisocyanat; Diphenylmethan-4,4'-diisocyanat; Diphenylmethan-2,4'-diisocyanat; Diphenylmethan-2,2'-diisocyanat, 4-Brom-1,3-phenyldiisocyanat; 4-Ethoxy-1,3-phenyldiisocyanat; 2,4'-Diisocyanat-diphenylether; 5,6-Dimethyl-1,3-phenyldiisocyanat; 2,4-Dimethyl-1,3-phenyldiisocyanat; 4,4-Diisocyanatodiphenylether; 4,6-Dimethyl-1,3-phenyldiisocyanat; 9,10-Anthracendiisocyanat; 2,4,6-Toluoltriisocyanat; 2,4,4'-Triisocyanatodiphenylether; 1,4-Tetramethylendiisocyanat; 1,6-Hexamethylendiisocyanat; 1,10-Decamethylendiisocyanat; 1,3-Cyclohexylendiisocyanat; 4,4'-Methylen-bis- (Cyclohexylisocyanat); Xyloldiisocyanat; 1-Isocyanato-3-methylisocyanato-3,5,5-trimethylcyclohexan (Isophorondiisocyanat); 1,3-Bis (isocyanato-1-methylethyl)-benzol (m-TMXDI); 1,4-Bis (isocyanato-1-methylethyl)-benzol (p-TMXDI).

Bevorzugt sind aromatische Isocyanate, wie Toluoldiisocyanat, Diphenylmethandiisocyanat usw. sowie auf dem Fachgebiet übliche Oligomere auf dieser Basis.

Die Umhüllung der Granulate läßt sich am einfachsten in einer rotierenden Trommel vornehmen, bei der das zu beschichtende Material während des gesamten Beschichtungsvorgangs in Bewegung gehalten wird. Auch andere Verfahren, wie z.B. die Beschichtung im Wirbelbett sind möglich.

Die erfindungsgemäße Polyol- und die Isocyanatkomponente werden gemischt oder getrennt dem zu beschichtenden Material zugegeben. Dies kann kontinuierlich oder portionsweise erfolgen. Zur Beschleunigung der Härtungsreaktion werden vorzugsweise Amine als Katalysatoren eingesetzt. Der Katalysator kann entweder in gasförmiger Form oder als gasförmiges Gemisch mit Luft oder Inertgas eingesetzt werden oder in flüssiger Form der Polyolkomponente zugegeben werden.

Die Menge des Beschichtungsmaterials richtet sich nach der gewünschten Wirkdauer bzw. Abgaberate und der Teilchengröße des Granulats und liegt in der Regel zwischen 3 und 15 Gew.-%, bezogen auf den zu beschichtenden körnigen Stoff. Da die Beschichtung bei Raumtemperatur erfolgen kann, lassen sich auch Stoffe, die bei höheren Temperaturen gefährliche Reaktionen verursachen, wie z.B. Ammoniumnitrat, problemlos beschichten.

Bei Anwendung der Katalysator-Begasungstechnik werden vorzugsweise niedrig siedende Amine wie beispielsweise Trimethylamin, Triethylamin, Dimethylethylamin oder Dimethylisopropylamin eingesetzt.

Falls der Katalysator der erfindungsgemäßen Polyolkomponente zugesetzt werden soll, können auch höher siedende Amine wie z.B. Triethanolamin, Vinylimidazol, aber auch alle anderen in der Polyurethanchemie üblichen Katalysatoren, wie z.B. zinnorganische Verbindungen, wie z.B. Dibutylzinnlaurat Verwendung finden.

Die erfindungsgemäß beschichteten körnigen Stoffe, können wasserlöslich sein. Beispiele körniger Stoffe sind Düngemittel, Pflanzenschutzmittel, Insektizide, Pestizide, Fungizide, Trocknungsmittel oder geeignete Gemische daraus. Als Düngemittel sind insbesondere sogenannte NPK-Dünger geeignet.

Die nachfolgenden Beispiele sollen die vorliegende Erfindung erläutern ohne diese in irgendeiner Form einzuschränken:

### Beispiel 1

### Herstellung eines Präkondensates mit Cardol/Cardanol aus Cashewnußöl modifiziert

In einem Reaktionskolben werden 412 g Phenol, 45,8 g decarboxyliertes und destilliertes Cashewnußöl, 198 g Paraformaldehyd und 0,6 g Zinkacetat gemischt, unter Rückflußbedingungen auf 115 °C erhitzt und eine Stunde lang bei dieser Temperatur gehalten. Das entstandene Reaktionswasser wird anschließend abdestilliert. Die Ausbeute beträgt ca. 85 %.

### Beispiel 2 (Vergleich)

### Herstellung eines Phenolharzpräkondensates

In einem Reaktionskolben werden 458 g Phenol, 198 g Paraformaldehyd und 0,5 g Zinkacetat gemischt und unter Rückflußbedingungen auf 115 °C erhitzt und eine Stunde lang bei dieser Temperatur gehalten. Anschließend wird das entstandene Reaktionswasser abdestilliert. Die Ausbeute beträgt ca. 85%.

### Beispiel 3

### Herstellung von Polyolformulierungen

| Polyolformulierung Nr. | 1* | 2 | 3 | 4 | 5 | 6 | 7 |
|---|---|---|---|---|---|---|---|
| Phenolharz aus Bsp.1 | | 25 | | | | | |
| Phenolharz aus Bsp. 2 | 25 | | | 15 | 15 | 15 | |
| Cardol/Cardanol oligomer | | | 25 | | 30 | 10 | 12,5 |
| Cardol/Cardanol aus Cashewnußöl | | | | 10 | | | 12,5 |
| Rizinusöl | 60 | 60 | 60 | 60 | 50 | 60 | 60 |
| Diethylenglykol | 10 | 10 | 10 | 10 | | | 10 |
| Glyzerin | | | | | | 10 | |
| Molekularsieb | 5 | 5 | 5 | 5 | 5 | 5 | 5 |

| | | | | | | | |
|---|---|---|---|---|---|---|---|
| * gemäß dem Stand der Technik EP 230 601 | | | | | | | |

### Beispiel 4

### Bereitstellung der Isocyanatkomponente.

Die Isocyanatkomponente besteht aus einem Gemisch von Oligomeren und Isomeren auf der Basis von Diphenylmethandiisocyanat mit einem Isocyanatgehalt von 29-33% und einer Funktionalität von ca. 2,7.

### Beispiel 5

### Beschichtung von Düngergranulat

Beschichtet wurde ein handelsübliches NPK-Düngergranulat mit einer mittleren Komgöße von 4 mm. Die Beschichtung erfolgte in einem rotierendem Gefäß bei Raumtemperatur. Der Dünger wurde während des gesamten Beschichtungsvorganges in Bewegung gehalten. Die Polyolkomponente wurde mit der Isocyanatkomponente im Verhältnis 1 : 1 gemischt.

Diese Mischung wurde- dem Dünger langsam zugegeben, homogen verteilt und mit Hilfe eines Aminkatalysators (Triethylamin) gehärtet.

Die Menge an Beschichtungsmaterial betrug 10 Gew.-% bezogen auf das Düngergranulat. Diese Menge wurde in mehreren Cyclen auf das Granulat in der beschriebenen Weise aufgetragen. Dabei wurde das Harz nach jedem Beschichtungsvorgang gehärtet, um die Klebneigung zu verringern. Eine Anzahl von 3 bis 6 Cyclen hat sich als geeignet erwiesen.

### Beispiel 6

### Bestimmung der Wirkstoffabgabe des beschichteten Düngergranulates

Zur Bestimmung der Wirkstoffabgabe werden 10 g des beschichteten Düngers in 1000 ml destilliertes Wasser gegeben und mit einem Magnetrührer in Bewegung gehalten. Die in Lösung gegangene Wirkstoffmenge wird über den Leitfähigkeitsanstieg des Wassers bestimmt. Über den Vergleich mit unbeschichtetem Düngergranulat berechnet man die in Lösung gegangene Wirkstoffmenge. Als Vergleichsbeispiel dient ein handelsüblicher NPK- Langzeitdünger mit einer Wirkdauer von 3 Monaten unter üblichen Bodenverhältnissen.

Die angegebenen Werte beschreiben die gelöste Düngermenge in Gew.-% bezogen auf die eingesetze Menge an Düngergranulat, das nach Beispiel 5 und mit den in Beispiel 3 beschriebenen verschiedenen Polyolformulierungen hergestellt wurde.

| | Düngergranulat, enthaltend die Polyolformulierung Nr. | 1* | 2 | 3 | 4 | 5 | 6 | 7 | Vergleich |
|---|---|---|---|---|---|---|---|---|---|
| Abgabe in Gew.-% nach | | | | | | | | | |
| 24h | | 4,5 | 1,8 | 1,9 | 2,4 | 1,1 | 1,5 | 1,3 | 2,5 |
| 48h | | 8,4 | 4,9 | 5,2 | 7,1 | 2,2 | 4,6 | 3,8 | 8,2 |
| 1 Woche | | 27,4 | 12,9 | 14,1 | 21,9 | 9,9 | 12,2 | 14,5 | 28,3 |
| 2 Wochen | | 43,0 | 25,4 | 22,7 | 39,6 | 22,8 | 25,0 | 27,3 | 42,8 |
| 3 Wochen | | 55,2 | 37,2 | 31,1 | 49,1 | 34,2 | 33,5 | 40,2 | 56,1 |
| 4 Wochen | | 65,1 | 48,1 | 47,0 | 60,1 | 47,3 | 49,6 | 48,1 | 64,3 |
| 6 Wochen | | 74,2 | 58,2, | 63,0 | 71,5 | 57,7 | 63,5 | 54,2 | 72,6 |

| | | | | | | | | | |
|---|---|---|---|---|---|---|---|---|---|
| * gemäß dem Stand der Technik EP 230 601 | | | | | | | | | |

## Patentansprüche

1. Kömiger Stoff, der mit einem Harz beschichtet ist, das das Reaktionsprodukt einer Polyolkomponente und einer Isocyanatkomponente umfaßt, wobei die Polyolkomponente mindestens eine Verbindung ausgewählt aus Cardol, Cardanol oder Oligomeren oder Derivaten dieser Verbindungen, umfaßt.

2. Beschichteter körniger Stoff nach Anspruch 1, wobei die Polyolkomponente durch Epoxidieren, Maleinieren oder Hydrieren von Cardol und/oder Cardanol oder durch Umsetzen von Cardol und/oder Cardanol oder der durch Maleinieren, Epoxidieren oder Hydrieren erhältlichen Verbindungen mit einem Aldehyd erhätlich ist.

3. Beschichteter körniger Stoff nach Anspruch 2, wobei die Reaktionsprodukte weiter mit Wasser und/oder einem Alkohol umgesetzt werden.

4. Beschichteter körniger Stoff nach Anspruch 1, wobei die Polyolkomponente das nach Erhitzen von Cashewnußöl und Abdestillieren von Cardol und Cardanol im Reaktionssumpf verbleibende Oligomer ist.

5. Beschichteter körniger Stoff nach einem der vorhergehenden Ansprüche, wobei die Polyolkomponente zusätzlich einen hydroxylguppenhaltigen Weichmacher und/oder ein hydroxylguppenhaltiges Verdünnungsmittel und/oder ein Kondensationsprodukt aus Phenolen und Aldehyden und/oder weitere übliche Zusatzmittel umfaßt.

6. Beschichteter körniger Stoff nach Anspruch 5, wobei das Kondensationsprodukt aus Phenolen und Aldehyden Novolake oder sogenannte Benzyletherharze umfaßt.

7. Beschichteter körniger Stoff nach einem der vorhergehenden Ansprüche, wobei die Isocyanatkomponente des Harzes ein aliphatisches, aromatisches oder heterocyclisches Isocyanat mit mindestens 2 lsocyanatgruppen in einem Molekül oder dessen Oligomere oder Polymere ist.

8. Beschichteter körniger Stoff nach Anspruch 7, wobei die Isocyanatkomponente Toluoldiisocyanat, Diphenylmethandiisocyanat oder ein Oligomer auf dieser Basis ist.

9. Beschichteter körniger Stoff nach einem der vorhergehenden Ansprüche, wobei der körnige Stoff wasserlöslich ist.

10. Beschichteter körniger Stoff nach einem der vorhergehenden Ansprüche, ausgewählt aus Düngemitteln, Pflanzenschutzmitteln, Insektiziden, Pestiziden, Fungiziden, Trocknungsmitteln und geeigneten Gemischen davon.

11. Beschichteter körniger Stoff nach einem der vorhergehenden Ansprüche, wobei der körnige Stoff ein NPK-Dünger ist.

12. Beschichteter kömiger Stoff nach einem der vorhergehenden Ansprüche, wobei die Menge der Beschichtung 3 bis 15 Gew.-%, bezogen auf die Menge an körnigern Stoff, beträgt.

13. Beschichteter körniger Stoff nach einem der vorhergehenden Ansprüche, wobei die Korngröße des körnigen Stoffes 1 bis 10 mm betragt.

14. Verfahren zur Herstellung eines beschichteten körnigen Stoffes wie in Anspruch 1 definiert, umfassend die Schritte:
(a) Bereitstellen eines körnigen Stoffes;
(b) Bereitstellen einer Polyolkomponente umfassend mindestens eine Verbindung ausgewählt aus Cardol, Cardanol oder Oligomeren oder Derivaten dieser Verbindungen und einer Isocyanatkomponente;
(c) Wahlweise Mischen der Polyolkomponente mit der Isocyanatkomponente;
(d) Zugabe der Mischung aus Schritt c) oder der Polyolkomponenente und der Isocyanatkomponente als Einzelstoffe zu dem bereitgestellten körnigen Stoff und Erzeugen einer Beschichtung auf dem körnigen Stoff,
(e) Härten der Mischung aus Schritt (d),
(f) Wahlweise wiederholen der Schritte (d) und (e), um die Beschichtung in mehreren Cyclen auf den körnigen Stoff aufzubringen.

15. Verfahren nach Anspruch 14, wobei 2 bis 10 Beschichtungscyclen durchgeführt werden.

16. Verfahren nach Anspruch 14 oder 15, wobei in Schritt (e) ein Aminkatalysator zum Härten verwendet wird.

17. Verwendung eines Harzes, das das Reaktionsprodukt einer Polyolkomponente und einer Isocyanatkomponente umfaßt, wobei die Polyolkomponente mindestens eine Verbindung ausgewählt aus Cardol, Cardanol oder Oligomeren oder Derivaten dieser Verbindungen umfaßt, zur Beschichtung eines körnigen Stoffes.

## Claims

1. A granular material coated with a resin comprising the reaction product of a polyol component and an isocyanate component, wherein the polyol component comprises at least one compound selected from the group consisting of cardol, cardanol or oligomers or derivatives of these compounds.

2. The coated granular material according to claim 1, wherein the polyol component is obtainable by epoxidizing, maleylating or hydrogenizing cardol and/or cardanol, or by reacting cardol and/or cardanol or the compounds obtainable by maleylating, epoxidizing or hydrogenizing with an aldehyde.

3. The coated granular material according to claim 2, wherein the reaction products are reacted further with water and/or an alcohol.

4. The coated granular material according to claim 1, wherein the polyol component is the oligomer remaining at the bottom of the reaction apparatus after cashew nut oil has been heated and cardol and cardanol have been distilled off.

5. The coated granular material according to any of the preceding claims, wherein the polyol component additionally comprises a plasticizer containing hydroxyl groups and/or a diluting agent containing hydroxyl groups and/or a condensation product of phenols and aldehydes and/or further common additives.

6. The coated granular material according to claim 5, wherein the condensation product of phenols and aldehydes comprises novolaks or so-called benzyl ether resins.

7. The coated granular material according to any of the preceding claims, wherein the isocyanate component of the resin is an aliphatic, aromatic or heterocyclic isocyanate having at least 2 isocyanate groups in one molecule or oligomers or polymers thereof.

8. The coated granular material according to claim 7, wherein the isocyanate component is toluene diisocyanate, diphenylmethane diisocyanate or an oligomer based thereon.

9. The coated granular material according to any of the preceding claims, wherein the granular material is water-soluble.

10. The coated granular material according to any of the preceding claims, selected from the group consisting of fertihzers, crop protection agents, insecticides, pesticides, fungicides, drying agents and suitable mixtures thereof.

11. The coated granular material according to any of the preceding claims, wherein the granular material is an NPK fertilizer.

12. The coated granular material according to any of the preceding claims, wherein the amount of the coating is 3 to 15 wt.-% based on the amount of the granular material.

13. The coated granular material according to any of the preceding claims, wherein the grain size of the granular material is 1 to 10 mm.

14. A method for the preparation of a coated granular material as defined in claim 1, comprising the steps of:
(a) providing a granular material;
(b) providing a polyol component comprising at least one compound selected from the group consisting of cardol, cardanol or oligomers or derivatives of these compounds and an isocyanate component;
(c) optionally mixing the polyol component and the isocyanate component;
(d) adding the mixture of step (c) or the polyol component and the isocyanate component as individual substances to the provided granular material and generating a coating on the granular material;
(e) curing the mixture of step (d),
(f) optionally repeating steps (d) and (e) to apply the coating to the granular material in several cycles.

15. The method according to claim 14, wherein 2 to 10 coating cycles are carried out.

16. The method according to claim 14 or 15, wherein an amine catalyst is used for the curing in step (e).

17. Use of a resin compnsing the reaction product of a polyol component and an isocyanate component, wherein the polyol component comprises at least one compound selected from the group consisting of cardol, cardanol or oligomers or derivatives of these compounds, for coating a granular material.

## Revendications

1. Substance granuleuse, qui est enrobée par une résine qui comprend le produit de réaction d'un composant polyol et d'un composant isocyanate, le composant polyol comprenant au moins un composé choisi parmi le cardol, le cardanol ou des oligomères ou des dérivés de ces composés.

2. Substance granuleuse enrobée selon la revendication 1, dans laquelle le composant polyol est susceptible d'être obtenu par époxydation, maléinisation ou hydrogénation du cardol et/ou du cardanol ou par réaction du cardol et/ou du cardanol ou des composés susceptibles d'être obtenus par maléinisation, époxydation ou hydrogénation avec un aldéhyde.

3. Substance granuleuse enrobée selon la revendication 2, dans laquelle on fait en outre réagir les produits de réaction avec l'eau et/ou avec un alcool.

4. Substance granuleuse enrobée selon la revendication 1, dans laquelle le composant polyol est l'oligomère restant dans la boue réactionnelle après chauffage de l'huile de noix de cajou et distillation du cardol et du cardanol.

5. Substance granuleuse enrobée selon l'une des revendications précédentes, dans laquelle le composant polyol comprend en outre un plastifiant contenant des groupes hydroxyle et/ou un diluant contenant des groupes hydroxyle et/ou un produit de condensation de phénols et d'aldéhydes et/ou d'autres additifs habituels.

6. Substance granuleuse enrobée selon la revendication 5, dans laquelle le produit de condensation de phénols et d'aldéhydes comprend des novolaques ou des résines dites éthers de benzyle.

7. Substance granuleuse enrobée selon l'une des revendications précédentes, dans laquelle le composant isocyanate de la résine est un isocyanate aliphatique, aromatique ou hétérocyclique avec au moins 2 groupes isocyanates dans une molécule ou ses oligomères ou polymères.

8. Substance granuleuse enrobée selon la revendication 7, dans laquelle le composant isocyanate est le toluènediisocyanate, de diphénylméthanediisocyanate ou un oligomère à base de ceux-ci.

9. Substance granuleuse enrobée selon l'une des revendications précédentes, dans laquelle la substance granuleuse est hydrosoluble.

10. Substance granuleuse enrobée selon l'une des revendications précédentes, choisie parmi des engrais, des agents phytosanitaires, des insecticides, des pesticides, des fongicides, des déshydratants et leurs mélanges appropriés.

11. Substance granuleuse enrobée selon l'une des revendications précédentes, dans laquelle la substance granuleuse est un engrais NPK.

12. Substance granuleuse enrobée selon l'une des revendications précédentes, dans laquelle la quantité d'enrobage est de 3 à 15 % en poids, rapporté à la quantité de la substance granuleuse.

13. Substance granuleuse enrobée selon l'une des revendications précédentes, dans laquelle la grosseur de grain de la substance granuleuse est 1 à 10 mm.

14. Procédé de préparation d'une substance granuleuse enrobée telle que définie dans la revendication 1, comprenant les étapes consistant à :
(a) Fournir une substance granuleuse ;
(b) Fournir un composant polyol comprenant au moins un composé choisi parmi le cardol, le cardanol ou des oligomères ou des dérivés de ces composés et un composant isocyanate ;
(c) Mélanger à volonté de composant polyol avec le composant isocyanate ;
(d) Ajouter au mélange provenant de l'étape (c) ou le composant polyol et le composant isocyanate comme composants individuels à la substance granuleuse fournie et former un enrobage sur la substance granuleuse ;
(e) Durcir le mélange de l'étape (d) ;
(f) Répéter à volonté les étapes (d) et (e), pour déposer en plusieurs cycles l'enrobage sur la substance granuleuse.

15. Procédé selon la revendication 14, dans lequel on effectue 2 à 10 cycles d'enrobage.

16. Procédé selon la revendication 14 ou 15, dans lequel on utilise dans l'étape (e) un catalyseur aminé pour le durcissement.

17. Utilisation d'une résine, qui comprend le produit de réaction d'un composant polyol et d'un composant isocyanate, le composant polyol comprenant au moins un composé choisi parmi le cardol, le cardanol ou des oligomères ou des dérivés de ces composés, pour l'enrobage d'une substance granuleuse.
